Europäisches Patentamt

European Patent Office

Office européen des brevets

(19)

(11) Veröffentlichungsnummer: **0 210 123 B1**

# (12) EUROPÄISCHE PATENTSCHRIFT

(45) Veröffentlichungstag der Patentschrift:
**25.10.89**

(51) Int. Cl.⁴: **H04L 11/14**

(21) Anmeldenummer: **86730107.9**

(22) Anmeldetag: **14.07.86**

(54) **Schaltungsanordnung zur netzunabhängigen Spannungsversorgung einer an ein Busnetzwerk angeschlossenen Verteileinrichtung für Datenstationen.**

(30) Priorität: **19.07.85 DE 3526364**

(43) Veröffentlichungstag der Anmeldung:
**28.01.87 Patentblatt 87/5**

(45) Bekanntmachung des Hinweises auf die Patenterteilung:
**25.10.89 Patentblatt 89/43**

(84) Benannte Vertragsstaaten:
**AT BE CH DE FR GB IT LI NL SE**

(56) Entgegenhaltungen:
**WO-A-83/03178**

**SIEMENS TELCOM REPORT, Band 3, Nr. 3, Juni 1980, Seiten 203-206, München, DE; G. BAER et al.: "Stromversorgungsgeräte für die Fernschreib- und Datenvermittlung"**
**PROCEEDINGS OF THE IFIP WORKING GROUP 6-4, LOCAL NETWORKS FOR COMPUTER COMMUNICATIONS, Zürich, DE, 27.-29. August 1980, Seiten 43-60, North-Holland Publishing Co., Amsterdam, NL; R.J. CARPENTER et al.: "Operational experience with the NBS local area network" 000**

(73) Patentinhaber: **Siemens Aktiengesellschaft, Wittelsbacherplatz 2, D-8000 München 2(DE)**

(72) Erfinder: **Moustakas, Steven, Dr., Schellingstrasse 19, D-8000 München 40(DE)**
Erfinder: **Goerne, Jan, Dipl.-Ing., Voglstrasse 8, D-8000 München(DE)**

ACTORUM AG

## Beschreibung

Die Erfindung betrifft eine Schaltungsanordnung zur netzunabhängigen Spannungsversorgung einer mit mehreren ersten Datenstationen verbundenen Verteileinrichtung, die die ersten Datenstationen sowohl untereinander als auch über eine für sämtliche erste Datenstationen gemeinsame Sende- und Empfangseinrichtung mit einem busförmigen strukturierten Netzwerk verbindet, an das weitere Datenstationen über weitere Sende- und Empfangseinrichtungen anschaltbar sind, wobei jede Datenstation zur Versorgung der eigenen Sende- und Empfangsanlagen eine datenstationsindividuelle Spannungsquelle aufweist und die Verteileinrichtung mit einer Steuerschaltung zur Datenkollisionserkennung und mit einer elektronischen Datenumlenkeinrichtung ausgestattet ist.

Verteileinrichtungen der eingangs definierten Art werden im Zusammenhang mit der Datenübertragung über Busnetze eingesetzt. Sie dienen im wesentlichen dazu, eine Erweiterung der Anschlußmöglichkeiten von Datenstationen an das Busnetz zu schaffen, in dem mehrere, bedingt durch entsprechenden Einsatz, stark funktionsverknüpfte Datenstationen durch die Verteileinrichtung zusammengefaßt werden können. Der Datenaustausch zwischen diesen zusammengefaßten Datenstationen wird durch eine elektronische Datenumlenkeinrichtung möglich, die den Datenfluß nicht über die Sende- und Empfangseinrichtung über das Busnetz überträgt, sondern direkt den mit der Empfangsadresse markierten Datenstationen übermittelt, die unmittelbar mit der Verteileinrichtung verbunden sind. Da nur die externen Verbindungen über das Busnetz geleitet werden müssen, kann somit die Zahl der maximal an das Busnetz angeschalteten Datenstationen erheblich vergrößert werden. Zur Steuerung der Datenflüsse innerhalb der Verteileinrichtung sind diverse Schaltvorgänge, wie die bereits erwähnte Ansteuerung der elektronischen Datenumlenkeinrichtung, außerdem die Ansteuerung der Schalteinrichtung zur Datenkollisionserkennung und zur Ansteuerung der Sende- und Empfangseinrichtung zur Datenübertragung über das Busnetz, erforderlich, so daß in Abhängigkeit der maximal zulässigen Anzahl von an die Verteileinrichtung anschaltbaren Datenstationen die Spannungsversorgung entsprechend ausgelegt sein muß. Die derzeit bekannten Verteileinrichtungen, wie beispielsweise die Fan-Out Unit "Intellink Ethernet Cluster Modul" von Intel oder "Derep" von Digital Equipment Corporation, bedienen sich der bekannten Netzspannungsversorgungen, die leistungsmäßig stets auf den Maximalausbau, d. h. auf die maximal zulässige Anzahl der an eine derartige Verteileinrichtung anschaltbaren Datenstationen, ausgelegt ist. Dies erfordert stets einen hohen Schaltungsaufwand mit entsprechend dimensionierten Netzspannungstransformatoren und den dazu notwendigen Siebschaltemitteln, die über dies einen erheblichen Platzbedarf innerhalb der Verteileinrichtung beanspruchen.

Die der Erfindung zugrunde liegende Aufgabe besteht darin, für diese Verteileinrichtung eine Schaltungsanordnung anzugeben, bei der die Spannungsversorgung nicht an dem Maximalausbau orientiert ist und darüberhinaus den Aufwand im Hinblick auf den Platzbedarf für die Bauteile der Spannungsversorgung zu reduzieren. Erfindungsgemäß wird dies durch die kennzeichnenden Merkmale des Anspruchs 1 erreicht.

Mit dem Vorsehen der Entkopplungsdiode und des Strombegrenzungswiderstandes für jede Datenstation kann die Spannungsversorgung für die Verteileinrichtung netzunabhängig und von jeder Datenstation aus von der dort vorhandenen Spannungsquelle erfolgen. Als erfindungswesentliche ist anzusehen, daß die Spannungsversorgung der Verteileinrichtung nicht mehr von überdimensionierten Vorleistungen ausgeht, sondern entsprechend der Zahl der an die Verteileinrichtung angeschalteten ersten Datenstationen automatisch immer die zur einwandfreien Funktionen benötigte Leistungskapazität aufweist. Die Spannungsquellen sämtlicher an die Verteileinrichtung angeschlossener Datenstationen werden praktisch über den Strombegrenzungswiderstand und die Entkopplungsdiode parallel geschaltet und liefern so über die gemeinsame Leitung als gemeinsames Bezugspotential die zum Betrieb der gemeinsamen Sende- und Empfangseinrichtung, der Datenkollisionserkennung und der Steuerung der Datenumlenkeinrichtung notwendige lastabhängige Stromgröße.

Gemäß einer vorteilhaften Ausgestaltung der Erfindung ist vorgesehen, daß die Verteileinrichtung zur Ansteuerung der ersten Spannungsversorgungseinrichtung eine den Anschluß der Sende- und Empfangseinrichtung überwachende Lastsensoreinrichtung aufweist, und die Lastsensoreinrichtung durch den Spannungsabfall an einem Lastwiderstand in der gemeinsamen Leitung steuerbar ist. Damit ist erreicht, daß die erste Spannungsversorgungseinrichtung nur dann wirksam geschaltet ist, wenn die Verteileinrichtung mit der Sende- und Empfangseinrichtung mit dem busförmig strukturierten Netzwerk in Verbindung steht und der Datenaustausch zwischen den ersten, gemeinsam mit der Verteileinrichtung verbundenen Datenstationen über das Netzwerk zu weiteren Datenstationen vorgesehen ist und funktionsmäßig gerade abläuft.

In ähnlicher Weise wird gemäß einer weiteren vorteilhaften Ausgestaltung der Erfindung innerhalb der Verteileinrichtung die Datensensoreinrichtung eingesetzt, mit deren Hilfe die Anschaltung von mindestens zwei Datenstationen überwacht wird. Nur wenn mehr als eine Datenstation gleichzeitig Nachrichten aussenden will, wird die Steuerschaltung zur Datenkollisionserkennung eingesetzt, um geeignete Schaltmaßnahmen zur Unterbrechung der fälschlicherweise sendenden Datenstation einzuleiten. Auch hier wird die zweite Spannungsversorgungseinrichtung wie die erste Spannungsversorgungseinrichtung erst wirksam geschaltet, wenn aufgrund der ablaufenden Schaltvorgänge dazu ein entsprechender Bedarf besteht.

Die Erfindung wird in einem figürlich dargestellten Ausführungsbeispiel näher erläutert.

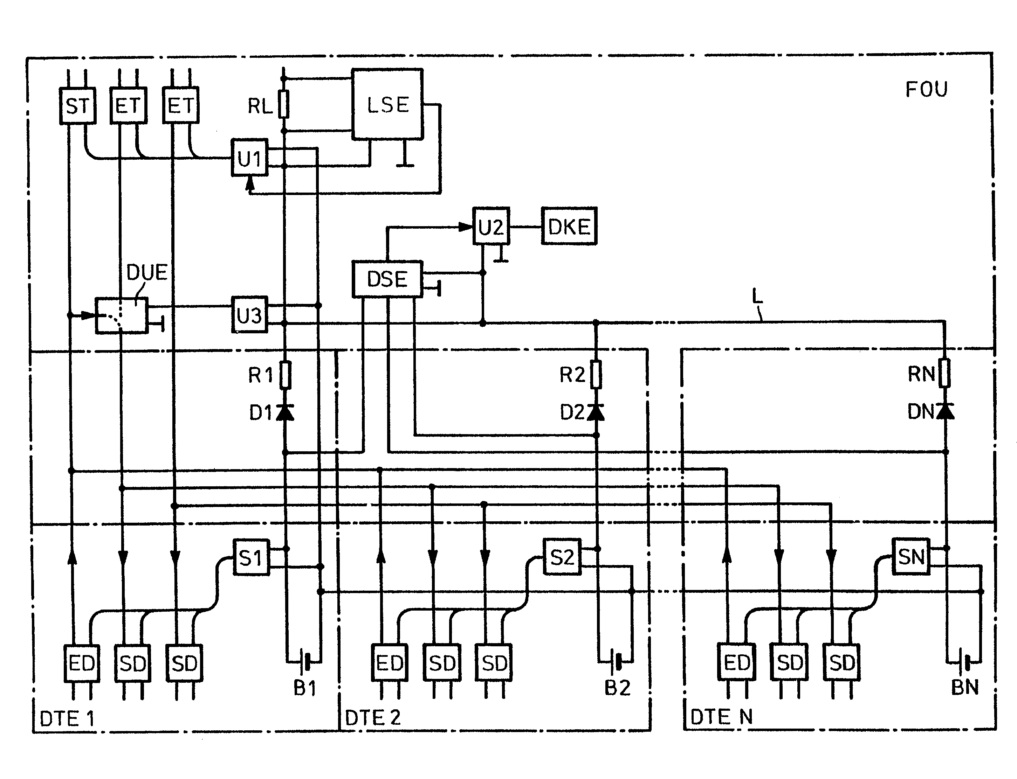

Der Figur ist auszugsweise die schaltungstechnische Realisierung der Verteileinrichtung FOU zu entnehmen, die als sogenannte FAN-OUT UNIT im wesentlichen mit der Sende- und Empfangseinrichtung ST, ET und der elektronischen Datenumlenkeinrichtung DUE ausgestattet ist. Außerdem ist erkennbar, daß für jede der an die Verteileinrichtung FOU angeschaltete Datenstationen DTE1, 2, N jeweils der Strombegrenzungswiderstand R... und die Entkopplungsdiode D... vorgesehen ist, und daß die jeweilige Stromzuführung B... aus der entsprechended Datenstation DTE1, 2, N auf die gemeinsame Leitung L geführt sind, die als gemeinsames Bezugspotential zur Strom- und Spannungsversorgung der für die ersten Datenstationen DTE1, 2, N gemeinsamen Schalteinrichtungen, wie der Sende- und Empfangseinrichtung ST, ET, der Datenkollisionserkennung DKE und der Datenumlenkeinrichtung DUE dient. Zur Optimierung des Leistungsbedarf dieser Verteileinrichtung FOU werden die verschiedenen Spannungsversorgungseinrichtungen U1, U2, U3 jeweils nur im Bedarfsfall aktiviert, d. h., daß die erste Spannungsversorgungseinrichtung U1 nur dann wirksam geschaltet ist, wenn die Sende- und Empfangseinrichtung ST, ET aktiv wird und Daten von einer der ersten Datenstationen DT1, 2, N über das busförmig strukturierte Netzwerk an eine ebenfalls an dem Netzwerk angeschaltete, jedoch nicht dargestellte andere Datenstation überträgt. Dies wird mit der Lastsensoreinrichtung LSE überwacht, die mit Hilfe des Lastwiderstandes RL innerhalb der gemeinsamen Leitung L den Belegungszustand der Sende- und Empfanseinrichtung ST, ET der Verteileinrichtung FOU erkennt. Der zweiten Spannungsversorgungseinrichtung U2 ist die Datensensoreinrichtung DSE vorgeschaltet, um die Spannungsversorgung für die Steuerschaltung der Datenkollisionserkennung DKE immer dann sicherzustellen, wenn mindestens zwei der Datenstationen DTE1, 2, N gleichzeitig den Datenaustausch vornehmen. Mit der Steuerschaltung zur Datenkollisionserkennung DKE wird dieser Zustand dadurch verhindert, daß eine der Datenstationen DTE1, 2, N durch einen entsprechenden Steuerbefehl an dem weiteren Aussenden der Daten gehindert wird.

Die dritte Spannungsversorgungseinrichtung U3 wird dagegen beim Anschalten einer beliebigen Datenstation DTE1, 2, N aktiviert, um gegebenenfalls die elektronische Datenumlenkeinrichtung DUE beim internen Verkehr zwischen den an der Verteileinrichtung FOU angeschlossenen Datenstationen DTE1, 2, N entsprechend steuern zu können.

Mit diesen Schaltmaßnahmen wird der Leistungsberdarf der Verteileinrichtung FOU, der sogenannten FAN-OUT UNIT, auf dem notwendigen Minimum gehalten und steigt erst mit der zunehmenden Anzahl von zusätzlich an die Verteileinrichtung FOU angeschlossenen Datenstationen DTE....

## Patentansprüche

1. Schaltungsanordnung zur netzunabhängigen Spannungsversorgung einer mit mehreren ersten Datenstationen verbundenen Verteileinrichtung, die die ersten Datenstationen sowohl untereinander als auch über eine für sämtliche erste Datenstationen gemeinsame Sende- und Empfangseinrichtung mit einem busförmig strukturierten Netzwerk verbindet, an das weitere Datenstationen über weitere Sende- und Empfangseinrichtungen anschaltbar sind, wobei jede Datenstation zur Versorgung der eigenen Sende- und Empfansanlagen eine datenstationsindividuelle Spannungsquelle aufweist und die Verteileinrichtung mit einer Steuerschaltung zur Datenkollisionserkennung und mit einer elektronischen Datenumlenkeinrichtung ausgestattet ist, dadurch **gekennzeichnet, daß**

in der Verteileinrichtung (FOU) für jede Datenstation (DTE1 bis DTEN) eine Entkopplungsdiode (D1, 2, N) mit einem dazu in Reihe geschalteten Strombegrenzungswiderstand (R1, 2, N) vorgesehen ist, und

die Strombegrenzungswiderstände (R...) über eine gemeinsame Leitung (L) verbunden sind und als gemeinsames Bezugspotential eine erste Spannungsversorgungseinrichtung (U1) für die gemeinsame Sende- und Empfangseinrichtung (ST, ET), eine zweite Spannungsversorgungseinrichtung (U2) für die Steuerschaltung der Datenkollisionserkennung (DKE) und eine dritte Spannungsversorgungseinrichtung (U3) für die elektronische Datenumlenkeinrichtung (DUE) bilden.

2. Schaltungsanordnung nach Anspruch 1, dadurch **gekennzechnet, daß**

die Verteileinrichtung (FOU) zur Ansteuerung der ersten Spannungsversorgungseinrichtung (U1) eine den Anschluß der Sende- und Empfangseinrichtung (ST, ET) überwachende Lastsensoreinrichtung (LSE) aufweist, und die Lastsensoreinrichtung (LSE) durch den Spannungsabfall an einem Lastwiderstand (RL) in der gemeinsamen Leitung (L) steuerbar ist.

3. Schaltungsanordnung nach Anspruch 1, dadurch **gekennzeichnet, daß**

die Verteileinrichtung (FOU) mit einer die Anschaltung von mindestens zwei Datenstationen (DTE...) überwachenden Datensensoreinrichtung (DSE) zum Wirksamwerden der Steuerschaltung für die Datenkollisionserkennung (DKE) ausgestattet ist.

## Claims

1. Circuit arrangement for a mains-independent voltage supply of a distributor connected to several first data stations, which distributor connects the first data stations both to one another and also to a network structured in the form of a bus, via a transmitting and receiving device which is common to all first data stations, to which network further data stations can be connected via further transmitting and receiving devices, in which arrangement each data station exhibits a data-station-individual voltage source for supplying its own transmitting and receiving systems and the distributor is equipped with a control circuit for data collision detection and with an electronic data rerouting device, characterized in that a decoupling diode (D1, 2, N) with a series-connected current-limiting resistor (R1, 2, N) is provided for each data station (DTE1 to DTEN) in the distributor (FOU), and the current-limiting resistors (R...) are connected via a common line (L) and, as common reference potential, form a first voltage supply device (U1) for the common transmitting and receiving device (ST, ET), a second voltage supply device (U2) for the control circuit of the data collision detection (DKE) and a third voltage supply device (U3) for the electronic data rerouting device (DUE).

2. Circuit arrangement according to Claim 1, characterized in that the distributor (FOU), for the purpose of actuating the first voltage supply device (U1), exhibits a load sensor device (LSE) which monitors the connection of the transmitting and receiving device (ST, ET), and the load sensor device (LSE) can be controlled by the voltage drop across a load resistor (RL) in the common line (L).

3. Circuit arrangement according to Claim 1, characterized in that the distributor (FOU) is equipped with a data sensor device (DSE), which monitors the connection of at least two data stations (DTE...), for rendering effective the control circuit for the data collision detection (DKE).

**Revendications**

1. Montage pour l'alimentation en tension, indépendante du secteur, d'un dispositif de répartition relié à plusieurs premiers postes de données, qui assure à la fois la liaison des premiers postes de données entre eux et, à travers un dispositif d'émission et de réception commun à tous les premiers postes de données, leur liaison à un réseau structuré en forme de bus, auquel peuvent être connectés d'autres postes de données, à travers d'autres dispositifs d'émission et de réception, chaque poste de données présentant une source de tension qui lui est associée individuellement, pour l'alimentation des équipement d'émission et de réception propres au poste, et le dispositif de répartition étant équipé d'un circuit de commande pour la détection de collisions de données et d'un dispositif électronique de changement de voie des données, characterisé en ce que le dispositif de répartition (FOU) comporte, pour chaque poste de données (DTE1 à DTEN), une diode de découplage (D1, 2, N) avec une résistance limitatrice de courant (R1, 2, N) qui lui est connectée en série et les résistances limitatrices de courant (R...) sont reliées entre elles par une ligne (L) commune et constituent, en tant qu'élément à potentiel de référence commun, un premier dispositif d'alimentation en tension (U1) pour le dispositif d'émission et de réception commun (ST, ET), un deuxième dispositif d'alimentation en tension (U2) pour le circuit decommande de la détection de collisions de données (DKE) et un troisième dispositif d'alimentation en tension (U3) pour le dispositif électronique de changement de voie des données (DUE).

2. Montage selon la revendication 1, caractérisé en ce que le dispositif de répartition (FOU) présente, pour l'excitation du premier dispositif d'alimentation (U1), un dispositif détecteur de charge (LSE) qui surveille la connexion du dispositif d'émission et de réception (ST, ET) et le dispositif détecteur de charge (LSE) peut être commandé par la chute de tension produite sur une résistance de charge (RL) dans la ligne commune (L).

3. Montage selon la revendication 1, caractérisé en ce que le dispositif de répartition (FOU) est équipé d'un dispositif détecteur de données (DSE) qui surveille la connexion simultanée d'au moins deux postes de données (DTE...) afin de rendre opérant le circuit de commande pour la détection de collisions de données (DKE).

EP 0 210 123 B1